(19) Europäisches Patentamt
European Patent Office
Office européen des brevets

(11) **EP 1 828 363 B1**

(12) **EUROPEAN PATENT SPECIFICATION**

(45) Date of publication and mention
of the grant of the patent:
**20.02.2013 Bulletin 2013/08**

(51) Int Cl.:
**D06P 3/82** (2006.01)     **D04B 1/18** (2006.01)

(21) Application number: **05858652.0**

(86) International application number:
**PCT/US2005/045741**

(22) Date of filing: **15.12.2005**

(87) International publication number:
**WO 2007/053160 (10.05.2007 Gazette 2007/19)**

(54) **DYED 2GT POLYESTER-SPANDEX CIRCULAR-KNIT FABRICS AND METHOD OF MAKING SAME**

GEFÄRBTE 2GT-POLYESTER-SPANDEX-RUNDSTRICKFASERN UND
HERSTELLUNGSVERFAHREN DAFÜR

TRICOTS CIRCULAIRES DE POLYESTER 2GT-ELASTHANNE COLORES ET LEUR PROCEDE DE
FABRICATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.12.2004 US 18003
29.06.2005 US 169346**

(43) Date of publication of application:
**05.09.2007 Bulletin 2007/36**

(73) Proprietor: **Invista Technologies S.à.r.l.
9000 St. Gallen (CH)**

(72) Inventors:
• **CHUANG, Cheng-yuan
Panchiao City,
Taiwan (CN)**
• **LAYCOCK, Graham H.
Singapore 239193 (SG)**
• **LEUNG, Raymond S.p.
Shatin,
Hong Kong (CN)**

(74) Representative: **Cockerton, Bruce Roger
Carpmaels & Ransford
One Southampton Row
London
WC1B 5HA (GB)**

(56) References cited:
**EP-A1- 0 677 604     EP-A1- 1 152 083
US-B1- 6 776 014**

**Description**

**PRIORITY CLAIM**

This application claims priority from U.S. applications Serial No. 11/018,003, filed December 21, 2004, and 11/169,346 filed June 28, 2005.

**FIELD OF THE INVENTION**

This invention relates to 2GT polyester-spandex circular-knit elastic fabrics which are dyed with disperse dyes. This invention also relates to a method of knitting, dyeing and finishing fabrics.

**BACKGROUND OF THE INVENTION**

Relatively small percentages of spandex fiber are frequently added to knit fabrics of 'hard' yarns, such as nylon, cotton, acrylic, wool and 2GT polyester, for example, in order to provide significant fabric stretch and recovery to the fabrics and the garments made therefrom. Hard yarns are relatively inelastic, which means that they can be stretched only very minor amounts without permanent deformation. As used herein, "spandex" means a manufactured fiber in which the fiber-forming substance is a long-chain synthetic polymer comprised of at least 85% of a segmented polyurethane. The polyurethane is prepared from a polyether glycol, a mixture of diisocyanates, and a chain extender and then melt-spun, dry-spun or wet-spun to form the spandex fiber.
For fabrics that are knit on circular, or weft, knitting machines the spandex is normally added as a bare yarn, without covering, and is fed in parallel with the hard yarn to the knitting needles. On its path from the feed package to the knit stitch, the spandex is under tension and is typically stretched, or drafted, 2.5X or more its original length; for example, drafting of 40 denier spandex yarn is typically 3.5X. Subsequent to knitting, the fabric is preset, scoured or cleaned, dyed, and then heatset to provide a colored fabric of desired dimensions and appearance. The method of dyeing and the types of dyes used depend mostly on the type of hard yarn used in the fabric, e.g., 2GT polyester, nylon, cotton, etc.
Fibers of polyethylene terephthalate (PET) polymer (hereinafter referred to as "2GT polyester" in this Specification) are hydrophobic and highly crystalline. Because the 2GT polyester contains no chemically active groups that interact with water-soluble dyes, the 2GT polyester can be dyed only with disperse dyes. The disperse dye class is so named because these dyes are almost insoluble in water and are used as finely divided aqueous dispersions (ref. ATI). Dyeing of 2GT polyester fibers is understood by many as a process wherein dye molecules penetrate into the 2GT polyester and into the available spaces among the 2GT polyester macromolecules. For the dye to penetrate the fiber to sufficient depths, in sufficient amounts and in a reasonable amount of time, the polymer structure must be 'opened up' to allow more efficient penetration of the dye molecules. If 2GT polyester is dyed in an aqueous solution at atmospheric pressure at 100 degrees C or less, a 'carrier' is normally required to help open the 2GT polyester structure. A carrier is a chemical, such as chlorobenzene, orthophenyl phenol, aromatic esters, and chlorinated hydrocarbons, that adds cost to the process and also creates environmental problems when disposing of the dye bath liquids that contain the carriers. An alternative, which is most widely used, is to heat the aqueous solution to about 130 degrees C in a pressure vessel for batch dyeing of the 2GT polyester-containing knit fabric. Such higher temperatures are sufficient to open the 2GT polyester fiber for efficient dyeing without the use of a carrier. High-pressure, high-temperature dyeing of 2GT polyester-containing knit fabric is almost always done now in equipment known as a jet dyer, wherein a loop of tubular knit fabric is moved in and out of the dye liquor by action of a venturi jet that uses the liquor (or alternately air) to forward the fabric.
Regardless of the particular 2GT polyester-dyeing method used, with or without carrier, it is well known that dyed 2GT polyester typically has a 'washfastness' problem wherein dye molecules can migrate to the 2GT polyester fiber surface and stain other fabrics and garments during clothes washing. The American Association of Textile Chemists and Colorists (AATCC) has developed standards to test the washfastness of dyed fabrics as measured by the staining of multifiber fabric test samples (e.g., acetate, cotton, polyamide, 2GT polyester, acrylic and wool) that are in the wash with the fabric whose washfastness is being tested. The individual fabric test samples are graded from 1 to 5, to indicate how much each has been stained by the dyed fabric being tested; a grade of 5 indicates no staining, wherein a grade of 1 indicates very significant staining. It is quite usual for 2GT polyester-dyed fabrics to stain companion polyamide fabrics, e.g., of nylon 6 and nylon 66 fibers, to a rating of 2 to 3.
Over time, the industry has learned various means and ways to reduce the 2GT polyester dye washfastness problem for specific cases. The choice of dye, in terms of color, shade and molecular structure, can result in more or less staining. Disperse dyes for dyeing PET are almost all made from chromophores of azo and anthraquinone, which have different structures and performance from one another. Dyes of other chromophores have been developed, which do give better washfastness performance, but these dyes are not in broad commercial use. Some dyes, azo and anthraquinone disperse dyes included, have more or less affinity for staining companion fabrics in a wash. Also, there are dyes with relatively large molecules and small molecules, and they are generally categorized as high energy to low energy dyes, respectively, as determined by the amount of energy to cause them to move into and out of the 2GT polyester or to sublimate. High energy dyes are also known as S-rated (or D) dyes by those in the trade. Middle energy dyes are also known as SE-rated (or C) dyes by those in the trade. Low energy dyes are also known as E-rated (or B) dyes by those in the trade.

Dyes of different shades stain more or less, with dyes of deep colors of red, black and blue being particularly susceptible to poor washfastness. Various methods for cleaning surface dye from fibers after dyeing have been developed, including reduction clearing. In reduction clearing, the fabric with dyed fibers is placed in a bath containing a reducing agent (e.g., hydrosulfite) and a base (e.g., sodium hydroxide); under the reduction-clearing process conditions, only the dye on the surface of the fibers is removed.

It is also known that heat treating 2GT polyester fibers, in order to reduce shrinkage or fix dimensions, also causes the phenomenon of thermomigration, wherein dye molecules migrate to the surface of the fiber and are then ready to stain other fabrics in the wash. Heat treating at high temperatures such as 175-200 degrees C and higher is very detrimental to washfastness of dyed 2GT polyester fibers, so that heat treating of 2GT polyester fabrics is done before dyeing when possible. It is thus possible to use a combination of process step sequences, conditions and materials to mitigate dyed 2GT polyester washfastness for specific cases and types and colors of fabrics.

When spandex and 2GT polyester fibers are circular knit into elastic fabrics and subsequently dyed with an azo- or anthraquinone-based disperse dye, the problems of washfastness are worse, compared to washfastness of fabrics knit from 2GT polyester alone. Both the 2GT polyester and spandex are subject to thermomigration of dye molecules from the interior to the surface of the fibers. Further, in cut and sew fabrics, the last step in the circular-knit elastic fabric finishing process, after dyeing, is to heatset the fabric in open width at its desired length and width dimensions. This is necessary because the spandex, being elastic and having a retractive force after being drafted in knitting, will cause the final fabric to be too dense or have too much elastic elongation for the garment end-use desired. The final heatset step is necessary to achieve the final fabric desired properties, such as basis weight, stretch elongation, edge curl and appearance. To heatset the spandex at the desired open-width dimensions typically requires dry heat at temperatures of 175 to 185 degrees C. These temperatures result in significant thermomigration of the dye and poor fabric washfastness results as measured by staining of other fabrics in the wash. Because of the strong effect of heatsetting on 2GT polyester-spandex knit fabric washfastness, there are no means to improve washfastness to stain grading levels of 4 to 5, for such fabrics that are heatset as a final step and are dyed with middle energy, SE-rated or high energy, S-rated dye colors and dyeshades. As a result, the market opportunities are limited for 2GT polyester-spandex knit fabrics, and particularly for fabrics dyed into dark, rich colors. There is longstanding need for such fabrics that are adequately washfast, and for an economical method to make them.

U.S. Patent 6,776,014 to Laycock, Leung and Singewald teaches a spandex-containing fabric and method for making the same. The method includes circular knitting with spandex at low draft and controlling the finishing and drying temperatures below the spandex heat set temperature.

## SUMMARY OF THE INVENTION

The invention includes a dyed knit, elastic fabric comprising polyethylene terephthalate and spandex. The fabric has staining grade numbers of 4.0 or higher, as measured by staining of multifiber test fabrics in AATCC Test Method 61-1996-2A, and is dyed with disperse dyes comprising azo or anthraquinone molecular groups. The invention further includes a method for making the knit fabric.

An elastic knit fabric of the invention comprising 2GT polyester and spandex, can exhibit good azo- and anthraquinone-disperse dye washfastness and desirable physical properties. The invention further includes a method for making the knit fabric that avoids heat-setting the fabric under dry conditions at elevated temperature as further described below.

The invention may include a circular-knit single-jersey elastic fabric that may include bare spandex plated with yarns of 2GT polyester continuous filament, 2GT polyester staple or 2GT polyester staple blends. The fabric can be dyed with azo or anthraquinone disperse SE or S dyes, and the fabric may have an improved washfastness rating versus conventional fabrics when measured as staining nylon, cotton, 2GT polyester, wool, or acrylic in an accelerated laundering test per AATCC Test Method 61-1996-2A. The fabric can have a basis weight in the range of 160 to 330 g/m2, and an elongation of 80% or more, for example from 80% to 130% in the length (warp) direction. Further, said fabric can have a spandex content by weight of 4% to 15% and a shrinkage after washing and drying of about 3% or less, and for example less than 3% in both length and width direction.

The invention also may include a garment made from the fabric described above. Such garments may be top-weight garments.

The invention can include a method for knitting, dyeing and finishing a knit elastic fabric comprising 2GT polyester and spandex, without open-width dry heat setting after dyeing. For example, the method may produce a single jersey circular knit fabric. The spandex feed yarn can range from about 17 to about 44 dtex and the 2GT polyester yarn can range from about 55 to about 165 dtex, with the 2GT polyester dtex per filament ranging from about 0.05 to about 3.5. The stitch length and 2GT polyester dtex can be selected so that the knit cover factor ranges from about 1.1 to about 1.6, and for example from about 1.2 to about 1.4. During knitting, the spandex yarn and 2GT polyester yarn may be plated in every course and the draft of the spandex feed yarn may be controlled so that the spandex yarn may be drafted no more than about 2X or about 2.5X its original length, depending on the embodiment of the method. In a first embodiment, the knit fabric can be disperse dyed at atmospheric pressure at dye liquor temperatures of about 100 degrees C or less, typically with a carrier, and the total spandex draft after knitting may be limited to about 2X. In a second embodiment the knit fabric is disperse dyed above atmospheric pressure at dye liquor temperatures ranging from about 110 to about 135 degrees C, and the total spandex draft after knitting is limited to about 2.5X. The dye liquor may contain azo or anthraquinone disperse dyes. Following dyeing, the fabric can be reduction-cleared and rinsed in order to remove excess dye from the surface of the fibers, and can then be air dried in open width in a tenter frame oven. The open width fabric may be held at its natural width and length and heated until dry. The air drying temperature can be a maximum of about 130 degrees C or less, and can be for example from about 120 to about 125 degrees C. These drying temperatures are the maximum dry heat temperatures that the fabric will experience in finishing after the dyeing step.

The invention also may include the circular knit, elastic, single jersey fabrics made according to the inventive method, and garments constructed from such fabrics.

## BRIEF DESCRIPTION OF THE FIGURES

FIG. 1 illustrates plated knit stiches comprising a hard yarn and spandex.
FIG. 2 is a schematic diagram of a portion of a circular knitting machine fed with a spandex feed and a hard yarn feed.
FIG. 3 Illustrates a series of single jersey knit stitches and highlights one stitch of stitch length "L".
FIG. 4 is a flow chart showing standard process steps for knitting, dyeing and finishing 2GT polyester-spandex circular-knit, elastic single-knit jersey fabrics.
FIG. 5 is a flow chart showing the inventive process steps for knitting, dyeing and finishing 2GT polyester-spandex circular-knit, elastic, single-knit jersey fabrics.

## DETAILED DESCRIPTION OF THE INVENTION

Knit fabrics of the invention may include those fabrics of a single-jersey stitch, with bare spandex plated in every course. The term "Commercially-useful" as used herein refers to ranges of physical properties (including fabric basis weight, washfastnees, elongation, stability and appearance) that can be associated with apparel fabrics.

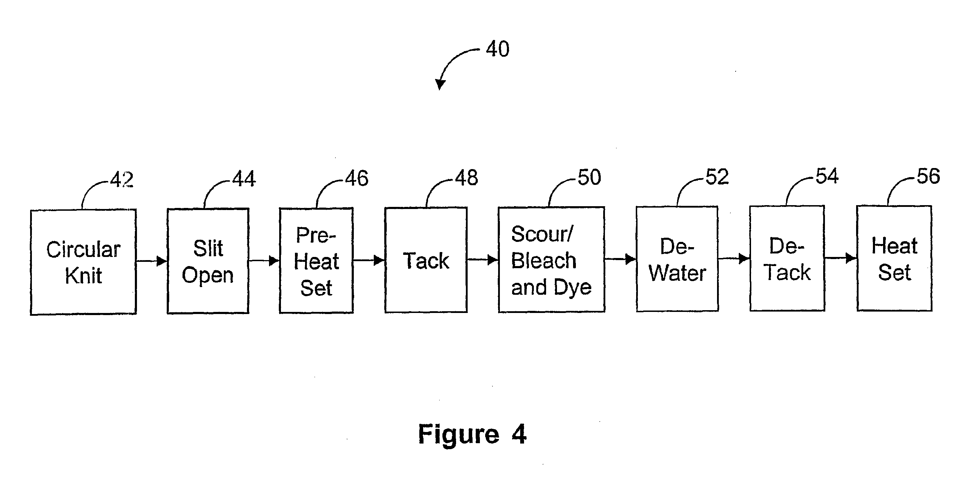

Figure 4 shows a flow diagram of a process 40 for making, dyeing and finishing circular knit fabrics of 2GT polyester-spandex. Depending on the knitting machine, the circular knit fabric will be knit into a tube, or cut into an open width (sheet) at the exit of the machine. The spandex is highly drafted, e.g., 3.5X for 44 dtex spandex, as it is plated into the knit stitches with the hard yarn. If the fabric is in tubular form at the exit of the knitting machine, the fabric is slit open 44 in a separate step before being relaxed and preset in a tenter oven 46, at temperatures typically at 190 degrees C, but typically for a very short residence time of 45-60 seconds. The purpose of this process step is to relax the spandex tension. Subsequent to relaxation and preset, the open fabric is sewn back into a tubular form 48 for multiple sequential operations in a jet-dye machine 50. While there are many variations of design of jet dye machines, they are all batch devices that circulate a tube of fabric, by means of a venturi jet that uses bath liquid, continuously into and out of a liquid bath of cleanser/bleach, or dye liquor, or caustic solution, as the case may be in the process step being performed. For cleaning, bleaching and reduction-clearing operations, the jet dye machine is operated at atmospheric pressure and liquid temperatures of 100 degrees C or less. Some specific chemicals, processing conditions and process residence times are given in the Examples. For dyeing the 2GT polyester-spandex fabric, the jet-dye machine may be loaded both with fabric and dye liquor, pressurized and heated to about 130 degrees C, and then operated by circulating the fabric through the dye liquor at specified process conditions and residence time sequences. One variable of importance is the liquor ratio, or the ratio of fabric weight to the weight of the dye liquor in the jet-dye machine.

After the above cleaning, bleaching, dyeing, and reduction-clearing operations, the fabric is removed from the jet dyer and dewatered 52 in a centrifuge or in squeeze rollers, for example. The tubular fabric is then un-sewn (de-tacked) 54 and opened once again into an open-width (sheet) fabric.

The dewatered, open-width 2GT polyester-spandex knit fabric is then processed in a tenter frame oven, to heat set the fabric into desired and stable length and width dimensions. The tenter frame stretches the fabric to desired dimensions in both width and length, and heatsets the spandex and 2GT polyester fibers by heating them to about 180 degrees C or more for a typical residence time of about 60 to about 120 seconds.

In the process of Figure 4, final fabric heatsetting **56** is the step that determines the final physical properties of the fabric, including basis weight, elongation, stability and appearance. For 2GT polyester-spandex single-jersey knit fabrics with spandex plated in every knit course, and for top weight garments, commercially-useful physical properties include the following:

- basis weights from about 160 to about 330 g/m2,
- minimum elongation of about 80% in the length (warp) direction,
- spandex content from about 4% to about 15% of the total fabric weight, and
- shrinkage after washing and drying of about 3% or less in width and length.

Fabric physical properties in these ranges can be readily achieved by final tenter-frame heatsetting. As noted above, however, the heatsetting operation significantly reduces the dye washfastness of 2GT polyester-spandex knit fabrics, and it is generally not possible to achieve dye washfastness ratings of 4 to 5, particularly for SE and S-rated (including commercial high energy dyes) that are of deep color and/or shade.

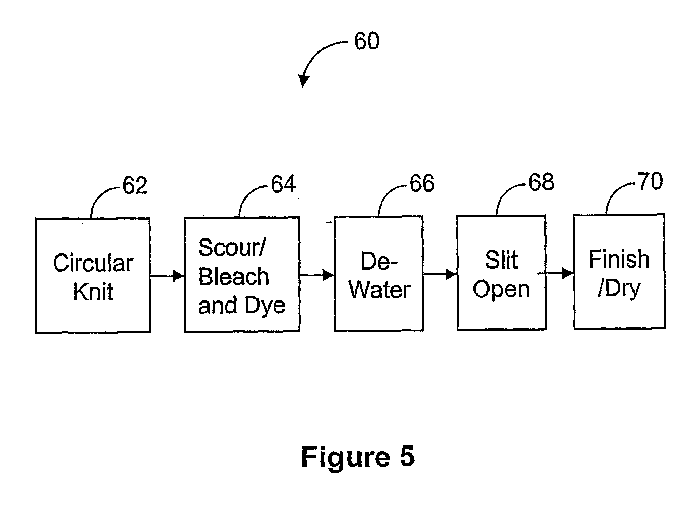

Figure 5 shows a process that eliminates the pre-heat setting and the final heat setting step, thereby improving the dye washfastness of the fabric. The selection of the knitting method used in the invention depends on the 'wet-finishing' conditions of the process steps after knitting. Wet-finishing refers to all process operations in which the fabric is wet, such as scouring, bleaching, dyeing and reduction-clearing operations.

In a first embodiment the total draft of the spandex yarn in knitting can be about 2.0X or less and the liquid temperatures in any of the wet-finishing steps, including dyeing, may range from about 80 to about 100 degrees C. In a second embodiment the total draft of the spandex yarn in knitting may be about 2.5X or less and the liquid temperature of the dyeing step may range from about 110 to about 135 degrees C.

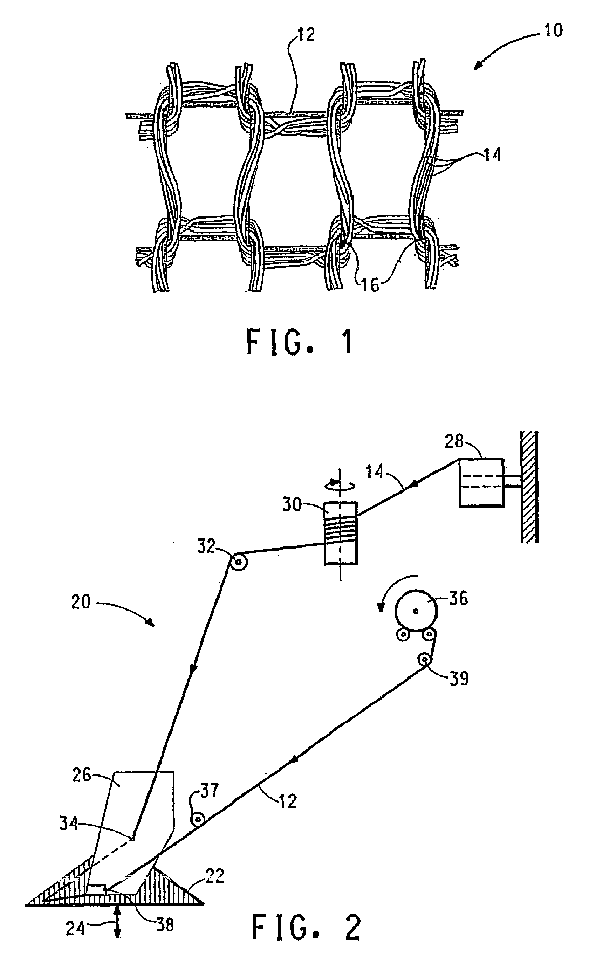

Figure 2 shows in schematic form one feed position **20** of a circular knitting machine having a series of knitting needles **22** that move reciprocally as indicated by the arrow **24** in response to a cam (not shown) below a rotating cylinder (not shown) that holds the needles. In a circular knitting machine, there are multiple numbers of these feed positions arranged in a circle, so as to feed individual knitting positions as the knitting needles, carried by the moving cylinder, are rotated past the positions.

For plating knit operations, a spandex yarn **12** and a 2GT polyester fully drawn, or hard, yarn **14** are delivered to the knitting needles **22** by a carrier plate **26**. The carrier plate **26** simultaneously directs both yarns to the knitting position. The spandex yarn **12** and 2GT polyester yarn **14** are introduced to the knitting needles **22** at the same or at a similar rate to form a single jersey knit stitch **10** like that shown in FIG. **1**.

The 2GT polyester yarn **14** is delivered from a wound yarn package **28** to an accumulator **30** that meters the yarn to the carrier plate **26** and knitting needles **22**. The 2GT polyester yarn **14** passes over a feed roll **32** and through a guide hole **34** in the carrier plate **26**. Optionally, more than one 2GT polyester yarn may be delivered to the knitting needles via different guide holes in the carrier plate **26**.

The spandex can be any commercially available elastane product for circular knitting, such as Lycra® spandex types 162 and 169, available from INVISTA S. á r. l. of Wichita, Kansas and Wilmington, Delaware.

The spandex **12** is delivered from a surface driven package **36** and past a broken end detector **39** and change of direction roll(s) **37** to a guide slot **38** within the carrier plate **26**. The feed tension of the spandex **12** is measured between the detector **39** and drive roll **37,** or alternatively between the surface driven package **36** and roll **37** if the broken end detector is not used. The guide hole **34** and guide slot **38** are separated from one another in the carrier plate **26** so as to present the hard yarn **14** and spandex **12** to the knitting needles **22** in side by side, generally parallel relation (plated).

The spandex stretches (drafts) when it is delivered from the supply package to the carrier plate and in turn to the knit stitch due to the difference between the stitch use rate and the feed rate from the spandex supply package. The ratio of the 2GT polyester yarn supply rate (meters/min) to the spandex supply rate is normally 2.5 to 4 times (2.5X to 4X) greater, and is known as the machine draft. This corresponds to spandex elongation of 150% to 300%, or more. The feed tension in the spandex yarn is directly related to the draft (elongation) of the spandex yarn. This feed tension is typically maintained at values consistent with high machine drafts for the spandex.

In two embodiments of the methods of the invention, the total spandex draft can be about 2.0X or less, or about 2.5X or less, respectively. These draft values are for the total draft of the spandex, which may include any drafting or drawing of the spandex that is included in the supply package of as-spun yarn. The value of residual draft from spinning is termed package relaxation, "PR", and it typically ranges from 0.05 to 0.15 for the spandex used in circular knit, elastic, single jersey fabrics. The total draft of the spandex in the fabric is therefore $MD*(1 + PR)$, where "MD" is the knitting machine draft. The knitting machine draft is the ratio of hard yarn feed rate to spandex feed rate, both from their respective supply packages.

Because of its stress-strain properties, spandex yarn drafts (draws) more as the tension applied to the spandex increases; conversely, the more that the spandex is drafted, the higher the tension in the yarn. A typical spandex yarn path, in a circular knitting machine, is schematically shown in FIG. 2. The spandex yarn **12** is metered from the supply package **36,** over or through a broken end detector **39**, over one or more change-of-direction rolls **37**, and then to the carrier plate **26**, which guides the spandex to the knitting needles **22** and into the stitch. There is a build-up of tension in the spandex yarn as it passes from the supply package and over each device or roller, due to frictional forces imparted by each device or roller that touches the spandex. The total draft of the spandex at the stitch is related therefore to the sum of the tensions throughout the spandex path.

The spandex feed tension is measured between the broken end detector **39** and the roll **37** shown in FIG. 2. Alternatively, the spandex feed tension is measured between the surface driven package **36** and roll **37** if the broken end detector **39** is not used. The higher this tension is set and controlled, the greater the spandex draft will be in the fabric, and vice versa. Suitable ranges for this feed tension includes from about 2 to 4 cN for 22 dtex spandex, and from about 4 to 6 cN for 44 dtex spandex in commercial circular knitting machines. With these feed tension settings and the additional tensions imposed by subsequent yarn-path friction, the spandex in commercial knitting machines normally will be drafted significantly more than 2.5X.

Minimizing the spandex friction between the supply package and the knit stitch helps keep the spandex feed tensions sufficiently high for reliable spandex feeding when the spandex draft in about 2.5X or less.

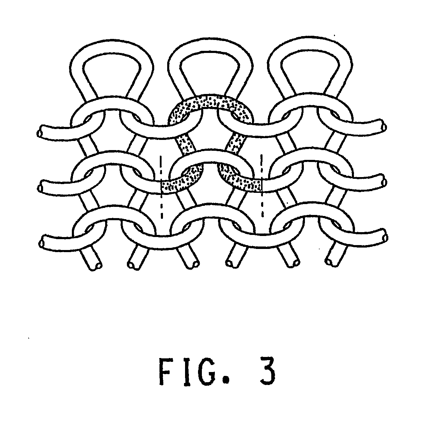

The structural design of a circular knit fabric can be characterized in part by the "openness" of each knit stitch. This "openness" may be related to the percentage of the area that is open versus that which is covered by the yarn in each stitch (see, e.g., FIGs. 1 and 3), and is thus related to fabric basis weight and elongation potential. For rigid, non-elastic weft knit fabrics, the Cover Factor ("Cf") is well known as a relative measure of openness. The Cover Factor is a ratio and is defined as:

$$Cf = \sqrt{(tex)} \div L$$

where tex is the grams weight of 1000 meters of the 2GT polyester yarn and is also equal to 10*dtex, and L is the stitch length in millimeters. FIG. 3 is a schematic of a single knit jersey stitch pattern. One of the stitches in the pattern has been highlighted to show how the stitch length, "L" is defined.

The knitting method can produce commercially useful circular knit, elastic, single jersey fabrics plated from bare spandex and 2GT polyester yarn without heat setting with spandex draft at about 2.0X or less in one embodiment, and at 2.5X or less in another embodiment for knit fabric is designed and manufactured within the following limits:

-    The Cover Factor, which characterizes the openness of the knit structure, can be between about 1.1 and about 1.6, for example between about 1.2 and about 1.4;
-    The 2GT polyester yarn decitex may be from about 55 to about 165;
-    The spandex decitex may range from about 17 to about 44;
-    The content of spandex in the fabric, on a % weight basis, can be from about 4% to about 15%.

While not wishing to be bound by any one theory, it is believed that the hard yarn in the knit structure resists the spandex force that acts to compress the knit stitch. The effectiveness of this resistance is related to the knit structure, as defined by the Cover Factor. For a given 2GT polyester yarn decitex, the Cover Factor is inversely proportional to the stitch length, L. This length is adjustable on the knitting machine, and is therefore a key variable for control in this process.

After knitting a circular knit, elastic, single jersey fabric of plated spandex with 2GT polyester **62**, the tubular fabric can be scoured in a cleaning solution, typically in a jet dye machine **64**, FIG. 5. Bleaching of the fabric is also an optional operation in this equipment. These operations are well known to those familiar with the art, and standard methods are satisfactory for the process.

The process may include dyeing at atmospheric conditions or at elevated temperatures and pressures **64**. Jet dyeing of 2GT polyester and 2GT polyester-spandex fabrics is well known to those who practice the art. Fabric and dye liquor are typically loaded into a jet-dye machine at weight ratios ranging from 1:10 to 1:15, which is the ratio of the weight of the fabric to the weight of the dye liquor. For the purpose of this invention, azo- or anthraquinone-disperse dyes are specified. The temperature of the dye liquor may be typically about 130 degrees C, but it can range from about 110 to about 135 degrees C, depending on the dye color and type. Dyeing conditions of temperature rise/decline rates and residence times at maximum temperatures are presumed to be best industry practice for the dyes used, and no special dyeing conditions or steps are needed for the process of this invention.

Standard industry practices are suitable for the dewatering **66** and slitting steps **68**.

The drying step **70** can be operated with controlled overfeed In the length (machine) direction so that the fabric stitches are free to move and rearrange ' without tension. A flat, non-wrinkled or non-buckted fabric may emerge after drying. These tachniques are familiar to those skilled in the art. A tenter-frame can be used to provide fabric overfeed during drying. The objective of the drying step can be to dry the fabric without the high temperatures that can also heatset the fabric and cause thermomigration of dye molecules from the interior of the 2GT polyester and spandex fibers to the surface of said fibers. To enhanced dye washfastness ratings, the fabric may be heated, until dry, at a temperature of about 130 degrees C or less, and typically at a temperature between about 120 and about 125 degrees C.

The knit 2GT polyester-spandex fabric can have good dye washfastness ratings, as well as physical properties that are commercially useful. For example, the product of this process has fabric stain ratings typically In the range of 4.0 or higer . The fabrics can have commercially-useful physical properties as follows:

- Basis weight in the range of about 160 to about 330 g/m2
- Elongation in the warp (length) direction of about 80% or more, end preferably from about 80% to about 130%
- Shrinkage after washing and drying of about 3% or less and typically less than 3% in both length and width.

The process provides this combination of product with the flexibility to use azo and anthraquinone dyes of deep color shades (including high energy dyes).

## Examples

The following examples are to be regarded as illustrative in nature and not as restrictive.

## Fabric Knitting and Finishing

Circular knit elastic single jersey fabrics with bare spandex plated with hard yarn for the examples were knit on a Pal Lung Circular Knitting Machine, Model PL-XS3/C, with 66 cm (26 inches) cylinder diameter, 24 gauge, and 78 yarn feed positions. The machine was operated at 26 rpm.

The broken end detector in each spandex feed path (see FIG. 2) was either adjusted to reduce sensitivity to yarn tension, or removed from the machines for these examples. The broken end detector was a type that contacted the yam, and therefore incluced tension in the spandex.

The spandex feed tension was measured between the spandex supply package 36 and the roller guide 37 (FIG. 2) with a Zivy digital tension meter, model number, EN-10. For examples of the invention, the spandex feed tensions were maintained at 1 gram or less for 20 and 30-denier spandex. These tensions were sufficiently high for reliable and continuous feeding of the spandex yarn to the knitting needles, and sufficiently low to draft the spandex only about 2.5X or less. We found that when the feed tensions were too low, the spandex yarn wrapped around the roller guides at the supply package and could not be reliably fed to the circular knitting machine.

All the knitted fabrics were scoured, dyed and dried per the process **60** in FIG 5.

Fabrics were scoured in a jet dye machine (Tong Geng Enterprise Co. Ltd. TGRU-HAF-1-30) at 90 °C for 20 minutes. The concentration of ingredients in the scouring solution, per liter of water, were as follows: 0.75 g/l Humectol Lys (Clariant), 2.0 g/l Na2CO3 (Sesoda), 0.5 g/l Imacol S (Clariant), 0.5 g/l Antimussol HT2S (Clarlant), and 0.5g/l Glacial acetic add.

The fabrics were dyed individually, and, the same machine was used for each example. For examples A1, B5, C9, and D13, Brilliant Red-SR GL (Clariant), a middle energy dye type SE (or C), was used at a 3.6 % level based on the weight of fabric (OWF). For examples A2, B6, C10, and D14, Rubine . SWF (Clariant) at 3.0 % OWF and Black SWF (Clariant) at 1.5 % OWF were used. Both these are middle energy dyes, type SE (or C). For examples A3, B7, C11, and D15, Dark Blue RD2RE 300% (Clariant), a high energy dye type S (or D), was used at 3.5 % OWF. For examples, A4, B8, C12, and D16, Black RD-3GE 300 % (Clariant), a high energy dye type S (or D), was used at 3.57 % OWF. The liquor ratio was 1:12. The concentrations of ingredients in the dye liquor for each fabric, per liter of water, were as follows: dye as given above, 0.5 g/l Imacol S (Clariant), and 2.0 g/l Sandacid PB (Clariant). The dyebath pH was 4.12. The fabric cycle time was 51 seconds/cycle. The bath temperature was raised from room Temperature to 130 °C at the rate of 1 °C per minute. The process was operated at 130 °C for 30 minutes, followed by cool down to 70 °C at the cooldown rate of 1 °C per minute. The dyebath was then drained and the machine recharged with cool water, followed by rinsing of the fabric for 10 minutes. The water was subsequently drained to prepare the fabric for reduction clearing.

The fabric was subsequently reduction cleared in the jet dye machine In a clearing solution at 85 °C for 30 minutes. The ingredients in the solution, per liter of water, where as follows: 3.0 g/l Eriopon OS (Ciba), 2.0 g/l $Na_2Co_2$ (Sesoda), 3.33 ml/l NaOH (45%), 0.5 g/l Antimussol HT2S (Clariant), and 6.0 g/l $NaS_2O_4$. The sulution temperature was raised from room temparature to 85 °C at a rate of 1 °C per minute and held there for 30 minutes. The solution was subsequently cooled down to 60 °C at the rate of 1 °C per minute, and then drained. Following that, the fabric was neutralized with glacial acetic acid for 10 minutes, then rinsed with clean water for 5 minutes. The wet fabrics were then de-watered by centrifuge, for 8 minutes or until water is removed depending on fabric and diameter and speed of equipment, as per normal practice. For the final step, a lubricant (softener) was padded onto the fabrics in a 77-liter water solution with Sandoperm SEI (Clariant, 1155g). The fabrics were then dried In e tenter oven at about 130 °C for about 30 seconds, at about 50 % fabric overfeed.

The above procedure and additives will be famillar to those experienced in the art of textile manufacturing and circular knitting of single jersey knit fabrics.

**Analytical Methods**

**Stain Ratings** Stain ratings ranging from 1.0 to 5.0 are determined by grading white multifiber fabric samples that are stained when included in an accelerated wash test. The wash test conditions and stain rating methodologies are those defined by the American Association of Textile Chemists and Colorists (AATCC) in AATCC Test Method 61-1996-2A.

**Spandex Draft** The following procedure, conducted In an environment at 20 °C and 65% relative humidity, is used to measure the spandex drafts in the Examples.

- De-knit (unravel) a yarn sample of 200 stitches (needles) from a single course, and separate the spandex and hard yarns of this sample. A longer sample is de-knit, but the 200 stitches are marked at beginning and end.
- Hang each sample (spandex or hard yarn) freely by attaching one end onto a meter stick with one marking at the top of the stick. Attach a weight to each sample (0.1 g/denier for hard yarn, 0.001 g/denier for spandex). Lower the weight slowly, allowing the weight to be applied to the end of the yarn sample without impact.
- Record the length measured between the marks. Repeat the measurements for 5 samples each of spandex and hard yarn.
- Calculate the average spandex draft according to the following formula:

$$\text{Draft} = (\text{Length of hard yarn between marks}) \div (\text{Length of spandex yarn between marks}).$$

If the fabric has been heat set, as in the prior art, it is usually not possible to measure the in-fabric spandex draft. This is because the high temperatures needed for spandex heat setting will soften the spandex yarn surface and the bare spandex will tack to itself at stitch crossover points **16** in the fabric (FIG. 1). Because of such multiple tack points, one cannot de-knit fabric courses and extract yarn samples.

**Fabric Weight---**Knit Fabric samples are die-punched with a 10cm diameter die. Each cut-out knit fabric sample is weighed in grams. The "fabric weight" is then calculated as grams/square meters.

**Spandex Fiber Content**---Knit fabrics are de-knit manually. The spandex is separated from the companion hard yarn and weighed with a precision laboratory balance or torsion balance. The spandex content is expressed as the percentage of spandex weight to fabric weight.

**Fabric Elongation--**The elongation is measured in the warp direction only. Three fabric specimens are used to ensure consistency of results. Fabric specimens of known length are mounted onto a static extension tester, and weights representing loads of 4 Newtons per centimeter of length are attached to the specimens. The specimens are exercised by hand for three cycles and then allowed to hang free. The extended lengths of the weighted specimens are then recorded, and the fabric elongation is calculated.

**Shrinkage**---Two specimens, each of 60 x 60 centimeters, are taken from the knit fabric. Three size marks are drawn near each edge of the fabric square, and the distances between the marks are noted. The specimens are then sequentially machine washed 3 times in a 12-minute washing machine cycle at 40 °C water temperature and air dried on a table in a laboratory environment. The distances between the size marks are then re-measured to calculate the amount of shrinkage.

**Face Curl**---A 4-inch x 4-inch (10.16cm x 10.16cm) square specimen is cut from the knit fabric. A dot is placed in the center of the square, and an 'X' is drawn with the dot as the center of the 'X'. The legs of the 'X' are 2 (5.08cm) inches long and in line with the outside corners of the square. The X is carefully cut with a knife, and then the fabric face curls of two of the internal points created by the cut are measured immediately and again in two minutes, and averaged. If the fabric points curl completely in a 360 ° circle, the curl is rated as 1.0; if it curls only 180°, the curl is rated ½; and so on.

**Examples 1-16**

Table 1 below sets forth the knitting conditions for the example knit fabrics. Lycra® types 169B and 162C were used for the spandex feeds. (commercially available from Invista S. á. r. l. of Wichita, KS and Wilmington, DE). Lycra® deniers were 40 and 30, or 44 dtex and 33 dtex, respectively. The stitch length, L, was a machine setting. Spandex feed tensions are listed in grams and 1.00 grams equal 0.98 centiNewtons(cN).

Table 2 summarizes the major finishing conditions of the fabrics. Include description of the specifics for each group of fabrics. Examples, A1, A2, B5, B6, C9, C10, D13, and D14 were dyed with middle energy dyes otherwise known in the industry as SE (or C) type dyes. Examples A3, A4, B7, B8, C11, C12, D15, and D16 were dyed with high energy dyes otherwise known in the industry as S (or D) type dyes.

**TABLE 1- KNITTING CONDITIONS**

| Example | Lycra® Spandex Type | Lycra® Dtex | Hard Yarn Type -Continuous Filament | Hard Yarn Dtex | # of Filaments | Dtex per Filament | Knitting Stitch Length, L, mm | Cover Factor, Cf | Lycra® Feed Tension, gm | Machine Gauge, mm |
|---|---|---|---|---|---|---|---|---|---|---|
| A1 | T169B | 33 | PET | 165 | 288 | 0.57 | 29.2 | 1.4 | 3.5 | 24 |
| A2 | T169B | 33 | PET | 165 | 288 | 0.57 | 29.2 | 1.4 | 3.5 | 24 |
| A3 | T169B | 33 | PET | 165 | 288 | 0.57 | 29.2 | 1.4 | 3.5 | 24 |
| A4 | T169B | 33 | PET | 165 | 288 | 0.57 | 29.2 | 1.4 | 3.5 | 24 |
| B5 | T169B | 33 | PET | 165 | 288 | 0.57 | 29.2 | 1.4 | 7.3 | 24 |
| B6 | T169B | 33 | PET | 165 | 288 | 0.57 | 29.2 | 1.4 | 7.3 | 24 |
| B7 | T169B | 33 | PET | 165 | 288 | 0.57 | 29.2 | 1.4 | 7.3 | 24 |
| B8 | T169B | 33 | PET | 165 | 288 | 0.57 | 29.2 | 1.4 | 7.3 | 24 |
| C9 | T162C | 44 | PET | 165 | 48 | 3.44 | 29.2 | 1.4 | 5.5 | 24 |
| C10 | T162C | 44 | PET | 165 | 48 | 3.44 | 29.2 | 1.4 | 5.5 | 24 |
| C11 | T162C | 44 | PET | 165 | 48 | 3.44 | 29.2 | 1.4 | 5.5 | 24 |
| C12 | T162C | 44 | PET | 165 | 48 | 3.44 | 29.2 | 1.4 | 5.5 | 24 |
| D13 | T162C | 44 | PET | 165 | 48 | 3.44 | 29.2 | 1.4 | over 11 | 24 |
| D14 | T162C | 44 | PET | 165 | 48 | 3.44 | 29.2 | 1.4 | over 11 | 24 |
| D15 | T162C | 44 | PET | 165 | 48 | 3.44 | 29.2 | 1.4 | over 11 | 24 |
| D16 | T162C | 44 | PET | 165 | 48 | 3.44 | 29.2 | 1.4 | over 11 | 24 |

**TABLE 2 - FINISHING CONDITIONS**

| Example | Jet Dyeing Dye Type | Energy Rating | Dye Color | Batch Liquor Ratio | Liquor Temp, °C | Heat Set, °C, 45sec. | Dry, °C, 120sec. |
|---|---|---|---|---|---|---|---|
| A1 | Disperse | Middle, SE | Blue | 1:12 | 130 | | below 130 |
| A2 | Disperse | Middle, SE | Black | 1:12 | 130 | | below 130 |
| A3 | Disperse | High, S | Red | 1:12 | 130 | | below 130 |
| A4 | Disperse | High, S | Purple | 1:12 | 130 | | below 130 |
| B5 | Disperse | Middle, SE | Blue | 1:12 | 130 | 170 | |
| B6 | Disperse | Middle, SE | Black | 1:12 | 130 | 170 | |
| B7 | Disperse | High, S | Red | 1:12 | 130 | 170 | |
| B8 | Disperse | High, S | Purple | 1:12 | 130 | 170 | |
| C9 | Disperse | Middle, SE | Blue | 1:12 | 130 | | below 130 |
| C10 | Disperse | Middle, SE | Black | 1:12 | 130 | | below 130 |
| C11 | Disperse | High, S | Red | 1:12 | 130 | | below 130 |
| C12 | Disperse | High, S | Purple | 1:12 | 130 | | below 130 |
| D13 | Disperse | Middle, SE | Blue | 1:12 | 130 | 170 | |
| D14 | Disperse | Middle, SE | Black | 1:12 | 130 | 170 | |
| D15 | Disperse | High, S | Red | 1:12 | 130 | 170 | |
| D16 | Disperse | High, S | Purple | 1:12 | 130 | 170 | |

Table 3 summarizes key results of the tests finished fabrics.

**TABLE 3- FABRIC RESULTS**

| Example | Lycra® spande xDraft | Fabric Basis Weight, g/m2 | Maximum Length Elongation % | Lycra ® spandex Content in Fabric, % | Shrinkage %, Warp by Weft | Face Curl, Fraction of 360° | Stain Rating to cotton | Stain Ratin to nylon | Stain Rating to polyester | Stain Rating to acrylic | Stain Rating to wool |
|---|---|---|---|---|---|---|---|---|---|---|---|
| A1 | 2.5 | 298 | 104 | 7.2 | -1 x -1 | 0.0 | 4.5 | 3.0 | 4.5 | 4.5 | 4.0 |
| A2 | 2.5 | 297 | 101 | 7.2 | -2 x -1 | 0.0 | 4.5 | 3.5 | 4.5 | 4.5 | 4.0 |
| A3 | 2.5 | 300 | 103 | 7.2 | -1 x -1 | 0.0 | 4.5 | 3.5 | 4.5 | 4.5 | 4.5 |
| A4 | 2.5 | 298 | 100 | 7.2 | -2 x -1 | 0.0 | 4.5 | 4.5 | 4.5 | 4.5 | 4.5 |
| B5 | 3.5 | 271 | 102 | 5.5 | -1 x 0 | 0.0 | 4.5 | 2.0 | -3.0 | 4.5 | 3.5 |
| B6 | 3.5 | 279 | 104 | 5.5 | -1 x 0 | 0.0 | 4.5 | 2.5 | 3.5 | 4.5 | 4.0 |
| B7 | 3.5 | 279 | 107 | 5.5 | -1 x 0 | 0.0 | 4.0 | 2.0 | 4.0 | 4.5 | 3.5 |
| B8 | 3.5 | 282 | 108 | 5.5 | -1 x 0 | 0.0 | 4.5 | 2.5 | 3.5 | 4.5 | 4.0 |
| C9 | 2.5 | 306 | 106 | 9.1 | 0 x 0 | 0.0 | 4.5 | 3.0 | 4.5 | 4.5 | 4.0 |
| C10 | 2.5 | 305 | 104 | 9.1 | 0 x -1 | 0.0 | 4.5 | 3.0 | 4.5 | 4.5 | 4.0 |
| C11 | 2.5 | 305 | 105 | 9.1 | 0 x -1 | 0.0 | 4.5 | 4.0 | 4.5 | 4.5 | 4.5 |
| C12 | 2.5 | 309 | 104 | 9.1 | 0 x -1 | 0.0 | 4.5 | 4.0 | 4.5 | 4.5 | 4.5 |
| D13 | 3.5 | 271 | 85 | 6.7 | 0 x 0 | 0.0 | 4.5 | 3.0 | 4.5 | 4.5 | 4.0 |
| D14 | 3.5 | 263 | 79 | 6.7 | 0 x 0 | 0.0 | 4.5 | 2.5 | 4.0 | 4.5 | 4.0 |
| D15 | 3.5 | 266 | 84 | 6.7 | 0 x 0 | 0.0 | 4.5 | 2.5 | 4.5 | 4.5 | 4.5 |
| D16 | 3.5 | 251 | 73 | 6.7 | 0 x 0 | 0.0 | 4.5 | 3.0 | 4.0 | 4.5 | 4.0 |

**Example A1**

The fabric was knit using 150D/288f microdenier 2GT polyester and 33 dtex Lycra® spandex. The draft of the spandex in the fabric was 2.5X. The fabric of Example A1 was dyed with a middle energy, SE-rated dye to a blue shade and finished according to the process schematically shown in FIG 5. The fabric basis weight for Example A1 is 298 g/m$^2$ with acceptable shrinkage. Stain rating to nylon is 3.0.

**Example A2**

The fabric of Example A1 was dyed with a middle energy, SE-rated dye to a black shade and finished according to the process schematically shown in FIG 5. The fabric basis weight for Example A2 is 297 g/m$^2$ with acceptable shrinkage. Stain rating to nylon is 3.5.

**Example A3**

The fabric of Example A1 was dyed with a high energy, S-rated dye to a red shade and finished according to the process schematically shown in FIG 5. The fabric basis weight for Example A3 is 300 g/m$^2$ with acceptable shrinkage. Stain rating to nylon is 3.5.

**Example A4**

The fabric of Example A1 was dyed with a high energy, S-rated dye to a purple shade and finished according to the process schematically shown in FIG 5. The fabric basis weight for Example A4 is 298 g/m$^2$ with acceptable shrinkage. Stain rating to nylon is 4.5.

**Example B5**

The fabric was knit using 150D/288f microdenier 2GT polyester and 33 dtex Lycra® spandex. The draft of the spandex in the fabric was 3.5X. The fabric of Example B5 was dyed with a middle energy, SE-rated dye to a blue shade and finished according to the process schematically shown in FIG 5. The fabric basis weight for Example B5 is 271 g/m$^2$ with acceptable shrinkage. Stain rating to nylon is 2.

**Example B6**

The fabric of example B5 was dyed with a middle energy, SE-rated dye to a black shade and finished according to the process schematically shown in FIG 5. The fabric basis weight for Example B6 is 279 g/m$^2$ with acceptable shrinkage. Stain rating to nylon is 2.5.

**Example B7**

The fabric of example B5 was dyed with a high energy, S-rated dye to a red shade and finished according to the process schematically shown in FIG 5. The fabric basis weight for Example B7 is 279 g/m$^2$ with acceptable shrinkage. Stain rating to nylon is 2.

**Example B8**

The fabric of example B5 was dyed with a high energy, S-rated dye to a purple shade and finished according to the process schematically shown in FIG 5. The fabric basis weight for Example B8 is 282 g/m$^2$ with acceptable shrinkage. Stain rating to nylon is 2.5.

**Example C9**

The fabric was knit using 150D/48f 2GT polyester and 44 dtex Lycra® spandex. The draft of the spandex in the fabric was 2.5X. The fabric of Example C9 was dyed with a middle energy, SE-rated dye to a blue shade and finished according to the process schematically shown in FIG 5. The fabric basis weight for Example C9 is 306 g/m$^2$ with acceptable shrinkage. Stain rating to nylon is 3.0.

### Example C10

The fabric of Example C9 was dyed with a middle energy, SE-rated dye to a black shade and finished according to the process schematically shown in FIG 5. The fabric basis weight for Example C10 is 305 g/m$^2$ with acceptable shrinkage. Stain rating to nylon is 3.0.

### Example C11

The fabric of Example C9 was dyed with a high energy, S-rated dye to a red shade and finished according to the process schematically shown in FIG 5. The fabric basis weight for Example C11 is 305 g/m$^2$ with acceptable shrinkage. Stain rating to nylon is 4.0.

### Example C12

The fabric of Example C9 was dyed with a high energy, S-rated dye to a purple shade and finished according to the process schematically shown in FIG 5. The fabric basis weight for Example C12 is 309 g/m$^2$ with acceptable shrinkage. Stain rating to nylon is 4.0.

### Example D13

The fabric was knit using 150D/48f 2GT polyester and 44 dtex Lycra@ spandex. The draft of the spandex in the fabric was 3.3X. The fabric was dyed with a middle energy, SE-rated dye to a blue shade and finished according to the process schematically shown in FIG 5. The fabric basis weight for Example D13 is 271 g/m$^2$ with acceptable shrinkage. Stain rating to nylon is 3.0.

### Example D14

The fabric of example D13 was dyed with a middle energy, SE-rated dye to a black shade and finished according to the process schematically shown in FIG 5. The fabric basis weight for Example D14 is 263 g/m$^2$ with acceptable shrinkage. Stain rating to nylon is 2.5.

### Example D15

The fabric of example D13 was dyed with a high energy, S-rated dye to a red shade and finished according to the process schematically shown in FIG 5. The fabric basis weight for Example D15 is 266 g/m$^2$ with acceptable shrinkage. Stain rating to nylon is 2.5.

### Example D16

The fabric of example D13 was dyed with a high energy, S-rated dye to a purple shade and finished according to the process schematically shown in FIG 5. The fabric basis weight for Example D16 is 251 g/m$^2$ with acceptable shrinkage. Stain rating to nylon is 3.0.

## Claims

1. Knit elastic fabric with staining grade numbers of 4.0 or higher, as measured by staining of multifiber test fabrics in AATCC Test Method 61- 1996-2A, said knit fabric comprising polyethylene terephthalate and spandex, said knit fabric dyed with disperse dyes comprising azo or anthraquinone molecular groups.

2. The knit fabric of claim 1, wherein the fabric has a basis weight in the range from about 160 to about 330g/m$^2$, and an elongation in the length direction of about 80% or more.

3. The knit fabric of claim 2, wherein the elongation in the length direction ranges from about 80% to about 130%.

4. The knit fabric of claim 2, wherein the spandex content by weight ranges from about 4% to about 15%, and the shrinkage of said fabric after washing and drying at laundering conditions is about 3% or less in the fabric length and width directions wherein the shrinkage is measured according to the shrinkage method of the specification.

**5.** The knit fabric of claim 2, wherein the knit fabric is a circular knit fabric.

**6.** The circular knit fabric of claim 5, wherein the elongation in the length direction ranges from about 80% to about 130%.

**7.** The circular knit fabric of claim 5, wherein the spandex content by weight ranges from about 4% to about 15%, and the shrinkage of said fabric after washing and drying at laundering conditions is about 3% or less in the fabric length and width directions.

**8.** A garment made from the knit, fabric of claim 1, wherein the knit fabric is a circular-knit single-jersey elastic fabric.

**9.** A method for making dyed, circular-knit single-jersey elastic fabric with staining grade numbers of 4.0 or higher, as measured by staining of multifiber test fabrics in AATCC Method 61-1996-2A, wherein the fabric is knit with hard yarn of polyethylene terephthalate or blends thereof and with plated bare spandex yarn, said method comprising:

a) controlling the feed of the spandex yarn in the knitting process so that the spandex yarn is drafted no more than about 2.5X its original length;
b) dyeing the fabric in an aqueous dye liquor of azo- or anthraquinone- based disperse dyes at temperatures below about 135 degrees Centigrade;
c) reduction-cleaning the fabric after dyeing to remove dye from the surface of the fibers in the fabric; and
d) drying the fabric in an oven at oven temperature below about 130 degrees C wherein the drying temperature is the maximum dry heat temperature that the fabric experiences In finishing after step b.

**10.** The method of claim 9, wherein bare spandex yarns of decitex ranging from about 17 to about 44 are plated in every course with one or more spun or continuous filament yarns, or blends thereof, of decitex ranging from about 55 to about 165, and wherein the knit stitch length and the polyethylene terephthalate yarn decitex are selected so that the knit cover factor ranges from about 1.1 to about 1.6.

**11.** The method of claim 10, wherein the knit cover factor ranges from about 1.2 to about 1.4 and the decitex per filament of the polyethylene terephthalate fibers ranges from about 0.05 to about 3.5.

**12.** The method of claim 10, wherein the fabric dyeing step comprises contacting the fabric with dye in a jet dye machine and the fabric drying step comprises drying the fabric in a tenter oven.

**13.** The method of claim 12, wherein the temperature of the drying oven ranges from about 120 to about 125 degrees C.

**14.** A garment made from the dyed circular knit, single jersey elastic fabric made by the method of claim 11.

**Patentansprüche**

**1.** Elastischer Strickstoff mit Befleckungsseinstufungsnummem von 4,0 oder höher, wie durch Beflecken von Mehrfaserteststoffen der AATCC-Testmethode 61-1996-2A gemäß gemessen, wobei der Strickstoff Polyethylenterephthalat und Spandex umfasst, wobei der mit Dispersionsfarbstoffen gefärbte Strickstoff molekulare Azo- oder Anthrachinongruppen umfasst.

**2.** Strickstoff nach Anspruch 1, wobei der Stoff ein Flächengewicht im Bereich von etwa 160 bis etwa 330 g/m$^2$ und eine Dehnung in Längenrichtung von etwa 80 % oder mehr aufweist.

**3.** Strickstoff nach Anspruch 2, wobei die Dehnung in Längenrichtung im Bereich von etwa 80 % bis etwa 130 % liegt.

**4.** Strickstoff nach Anspruch 2, wobei der Spandexgehalt, auf das Gewicht bezogen, im Bereich von etwa 4 % bis etwa 15 % liegt und die Schrumpfung des Stoffs nach dem Waschen und Trocknen unter Waschbedingungen etwa 3 % oder weniger in den Stofflängen- und -breitenrichtungen beträgt, wobei die Schrumpfung dem Schrumpfverfahren der Beschreibung gemäß gemessen wird.

**5.** Strickstoff nach Anspruch 2, wobei der Strickstoff ein Rundstrickstoff ist.

**6.** Rundstrickstoff nach Anspruch 5, wobei die Dehnung in Längenrichtung im Bereich von etwa 80 % bis etwa 130 % liegt.

7. Rundstrickstoff nach Anspruch 5, wobei der Spandexgehalt, auf das Gewicht bezogen, im Bereich von etwa 4 % bis etwa 15 % liegt und die Schrumpfung des Stoffs nach dem Waschen und Trocknen unter Waschbedingungen etwa 3 % oder weniger in den Stofflängen- und -breitenrichtungen beträgt.

8. Kleidungsstück, das aus dem Strickstoff nach Anspruch 1 hergestellt ist, wobei der Strickstoff ein elastischer Rundstrick-Single-Jerseystoff ist.

9. Verfahren zum Herstellen von gefärbtem, elastischem Rundstrick-Single-Jerseystoff mit Befleckungseinstufungs-nummern von 4,0 oder höher, wie durch Beflecken von Mehrfaserteststoffen der AATCC-Testmethode 61-1996-2A gemäß gemessen, wobei der Stoff mit Hartgarn aus Polyethylenterephthalat oder Mischungen davon und mit plattiertem, nacktem Spandexgarn gestrickt ist, wobei das Verfahren Folgendes umfasst:

a) das Regulieren des Vorschubs des Spandexgams beim Strickvorgang, so dass das Spandexgam um nicht mehr als etwa 2,5 x seiner ursprünglichen Länge verstreckt wird;
b) das Färben des Stoffs in einer wässrigen Farbstoffflotte von Dispersionsfarbstoffen auf Azo- oder Anthrachinonbasis bei Temperaturen unter etwa 135 Grad Celsius;
c) das reduktive Reinigen des Stoffs nach dem Färben, um Farbstoff von der Oberfläche der Fasern in dem Stoff zu entfernen; und
d) das Trocknen des Stoffs in einem Ofen bei einer Ofentemperatur unter etwa 130 Grad C, wobei die Trockungstemperatur die maximale Trockenhitzetemperatur ist, die der Stoff bei der Avivagebehandlung nach Schritt b durchmacht.

10. Verfahren nach Anspruch 9, wobei die nackten Spandexgarne mit Decitex im Bereich von etwa 17 bis etwa 44 in jedem Gang mit einem oder mehreren gesponnen oder Endlosfilamentgarnen oder Mischungen davon mit Decitex im Bereich von etwa 55 bis etwa 165 plattiert werden, und wobei die Strickmaschenlänge und das Decitex des Polyethylenterephthalatgarns so ausgewählt werden, dass der Strickdeckungsfaktor im Bereich von etwa 1,1 bis etwa 1,6 liegt.

11. Verfahren nach Anspruch 10, wobei der Strickdeckungsfaktor im Bereich von etwa 1,2 bis etwa 1,4 liegt und das Decitex pro Filament der Polyethylenterephthalatfasern im Bereich von etwa 0,05 bis etwa 3,5 liegt.

12. Verfahren nach Anspruch 10, wobei der Stofffärbeschritt das Kontaktieren des Stoffs mit Farbstoff in einer Düsenfärbemaschine umfasst und der Stofftrocknungsschritt das Trocknen des Stoffs in einem Spannrahmenofen umfasst.

13. Verfahren nach Anspruch 12, wobei die Temperatur des Trocknungsofens im Bereich von etwa 120 bis etwa 125 Grad C liegt.

14. Kleidungsstück, das aus dem gefärbten elastischen Rundstrick-Single-Jerseystoff durch das Verfahren nach Anspruch 11 hergestellt wird.

**Revendications**

1. Tissu élastique tricoté avec des nombres de qualité de coloration de 4,0 ou plus, tels que mesurés en colorant des tissus tests à fibres multiples dans la méthode d'essai AATCC 61-1996-2A, ledit tissu tricoté comprenant un polyéthylène téréphtalate et un spandex, ledit tissu tricoté étant coloré avec des colorants dispersés comprenant des groupes moléculaires d'azo ou d'anthraquinone.

2. Tissu tricoté selon la revendication 1, où le tissu possède une masse surfacique dans l'intervalle d'environ 160 à environ 330 g/m$^2$ et un allongement dans la direction de la longueur d'environ 80% ou plus.

3. Tissu tricoté selon la revendication 2, dans lequel l'allongement dans la direction de la longueur varie d'environ 80% à environ 130%.

4. Tissu tricoté selon la revendication 2, dans lequel la teneur en poids de spandex varie d'environ 4% à environ 15% et le retrait dudit tissu après un lavage et un séchage à des conditions de blanchissage est d'environ 3% ou moins dans les directions de longueur et de largeur du tissu où le retrait est mesuré selon la méthode de retrait de la description.

5. Tissu tricoté selon la revendication 2, où le tissu tricoté est un tissu tricoté circulaire.

6. Tissu tricoté circulaire selon la revendication 5, dans lequel l'allongement dans la direction de la longueur varie d'environ 80% à environ 130%.

7. Tissu tricoté circulaire selon la revendication 5, dans lequel la teneur en poids de spandex varie d'environ 4% à environ 15% et le retrait dudit tissu après un lavage et un séchage à des conditions de blanchissage est d'environ 3% ou moins dans les directions de longueur et de largeur du tissu.

8. Vêtement fabriqué avec le tissu tricoté selon la revendication 1, dans lequel le tissu tricoté est un tissu élastique de jersey simple de tricot circulaire.

9. Procédé pour la fabrication d'un tissu élastique de jersey simple de tricot circulaire coloré avec des nombres de qualité de coloration de 4,0 ou plus, tels que mesurés en colorant des tissus tests à fibres multiples dans la méthode AATCC 61-1996-2A, dans lequel le tissu est tricoté avec un fil dur d'un polyéthylène téréphtalate ou de mélanges de celui-ci et avec un fil de spandex nu guipé, ledit procédé comprenant:

a) la régulation de l'alimentation du fil de spandex dans le procédé de tricotage de sorte que le fil de spandex est étiré à pas plus d'environ 2,5x sa longueur d'origine;
b) la coloration du tissu dans une liqueur de colorant aqueux de colorants dispersés à base d'azo ou d'anthraquinone à des températures en dessous d'environ 135 degrés Centigrade;
c) l'étape de réduction-nettoyage du tissu après la coloration pour retirer le colorant de la surface des fibres dans le tissu; et
d) le séchage du tissu dans un four à une température de four en dessous d'environ 130 degrés C où la température de séchage est la température de chaleur sèche maximum que le tissu connait dans une finition après l'étape b.

10. Procédé selon la revendication 9, dans lequel des fils de spandex nus d'un décitex variant d'environ 17 à environ 44 sont guipés dans chaque rangée de mailles avec un ou plusieurs fils de filaments filés ou continus, ou des mélanges de ceux-ci, d'un décitex variant d'environ 55 à environ 165 et dans lequel la longueur de maille de tricot et le décitex du fil de polyéthylène téréphtalate sont choisis pour que le facteur de couverture de tricot varie d'environ 1,1 à environ 1,6.

11. Procédé selon la revendication 10, dans lequel le facteur de couverture de tricot varie d'environ 1,2 à environ 1,4 et le décitex par filament des fibres de polyéthylène téréphtalate varie d'environ 0,05 à environ 3,5.

12. Procédé selon la revendication 10, dans lequel l'étape de coloration du tissu comprend la mise en contact du tissu avec un colorant dans une machine de coloration par jet et l'étape de séchage du tissu comprend le séchage du tissu dans un four à rame continue.

13. Procédé selon la revendication 12, dans lequel la température du four de séchage varie d'environ 120 à environ 125 degrés C.

14. Vêtement fait à partir du tissu élastique de jersey simple, de tricot circulaire coloré fabriqué par le procédé selon la revendication 11.

FIG. 1

FIG. 2

FIG. 3

EP 1 828 363 B1

40

42 44 46 48 50 52 54 56

| Circular Knit | → | Slit Open | → | Pre-Heat Set | → | Tack | → | Scour/ Bleach and Dye | → | De-Water | → | De-Tack | → | Heat Set |

**Figure 4**

EP 1 828 363 B1

- 60

- 62    - 64    - 66    - 68    - 70

| Circular Knit | → | Scour/ Bleach and Dye | → | De- Water | → | Slit Open | → | Finish /Dry |

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 01800304 A
- US 11169346 B

- US 6776014 B, Laycock, Leung and Singewald